# EUROPEAN PATENT SPECIFICATION

(11) **EP 1 491 105 B1**
(45) Date of publication and mention of the grant of the patent: **18.10.2006**
(21) Application number: 03014706.0
(22) Date of filing: 27.06.2003
(51) Int. Cl.: A41D 27/24

(54) **Welded microseam**
Schweissnaht geringer Ausdehnung
Ligne de soudure de petite dimension

(43) Date of publication of application: 29.12.2004
(60) Divisional application: 06116573.4
(73) Proprietor: W.L. Gore & Associates GmbH, 85640 Putzbrunn (DE)
(72) Inventor: Hottner, Martin, 83052 Bruckmühl (DE)
(74) Representative: Weber, Doris

(56) References cited:
- EP-A- 0 410 292
- EP-A- 0 721 745
- EP-A- 0 749 701
- EP-A- 0 906 824
- US-A1- 2002 056 502

## Description

The present invention relates to the production of a waterproof seam between adjacent pieces of waterproof, water-vapor-permeable laminates e.g. in the construction of high performance waterproof, water-vapor permeable garments, gloves, shoes, etc. The invention allows waterproof thin seams of very small dimensions to be produced. Furthermore the invention allows continuous curved welded seams.

Waterproof, water-vapor-permeable fabrics and garments made therefrom are well known in the art. Such garments combine waterproofness with breathability, whereby water-vapor generated by the wearer is able to pass out through the garment thereby making the garment comfortable to wear.
A number of waterproof, water-vapor permeable materials (referred to herein as the "functional layer") are known in the art. Very often these functional layers are laminated to one or more textile layers. Whilst the laminate itself is waterproof, the production and sealing of seams made between adjacent pieces of functional layers or of laminate material constitutes a particular problem. Conventionally, such seams are made by sewing the material and then covering the seam with seam sealing tape which is secured to the fabric on either side of the seam itself. This technique is producing very thick seams (one layer above the other layer) which are not waterproof because the adhesive of the seam sealing tape is not able to encapsulates each yarn of the fabric in a waterproof manner.
Another technique to form a waterproof seam is the welding of at least two synthetic materials together. Welded seams are known in the prior art. One type of a welded seam is disclosed in the WO 99/16620 A1 and shown in figure 1. The method in WO 99/16620 involves overlapping the fabric pieces and bonding them together by use of heat and pressure. Such welded seams are disadvantageous because the cut edge of at least one of the fabric pieces is always visible on the outside of the construction such as a garment, which is undesirable for aesthetic and fashionable reasons. Also undesirable is the visible welded track on the outside. A further problem is the fraying of the fabric edges themselves. Finally the junction of seams causes an accumulation of even more than two layers which are difficult to seal with fixed process settings. Very often it results in burnt or leaking seam junctions.

US 4,938,817 describes a bonded seam construction of spunbonded polyolefin synthetic fabrics for cleanroom garments. Such a seam is shown in figure 2. The seams produced according to the teaching of this patent are relatively stiff and therefore uncomfortable to the wearer. Furthermore the welded track is visible on the outside what is undesirable for aesthetic and fashionable reasons. A further problem is that in seam junctions the number of fabric layers forming the seam is increasing and makes the junction stiff and very uncomfortable for the wearer.

Other prior art is known in which the edges of waterproof water-vapor permeable laminates are bonded together using a method describes in accordance with WO 02/24015 A1 and with figure 3. The seam is formed by bonding surfaces of polyurethane membranes to each other by melting them. Such seams are undesirable for fashionable garments because the polyurethane membrane layer is forming the outside of the laminate and therefore the outside of a garment. A further problem is the poor seam strength because the peel forces are directed to the seam orientation along the seam-line. Also in seam junctions there is a layering or an accumulation of laminate layers which results in thick and stiff seam junctions. Such multi-layered seam junctions are often not waterproof. Furthermore, the edge areas around the seam can fray.

EP 0 410 292 A2 discloses a method of providing strong seams in watertight inserts for lining articles of clothing. It addresses the problem of seams being potential sites of water penetration, as well as being oversized and mechanical weak points. The problem is overcome by a process, wherein a waterproof membrane (coated with a hydrophilic polymer) is laminated to a textile. The joining is achieved by using a discontinuous adhesive of a thermoplastic polymer. The laminates are superimposed, so that the textile material is in an adjacent, abutting relationship, and then joined by the adhesive. Here too the seams are thick and stiff, and therefore uncomfortable.

EP 0721 745 A2 concerns airtight seams in clean garments, which do not have to be waterproof. The two parts of a cleanroom garment made of synthetic textiles are superimposed and heat bonded. Fig 3E shows the application of an enforcement part to the two bonded textile parts thereby reorienting the edges. Once again thick, stiff seams, which are unaesthetic due to the enforcement layer, are produced by this method.

There is therefore a need for a waterproof, durable and flexible waterproof seam, that is not visible on the outside of a construction e.g. a garment, and is thin and comfortable, and suitable for tough end uses and close fitting applications, whilst still being aesthetically pleasing and without having frayed edges.
It is therefore an object of the present invention to improve the comfort of the seams in garments made of waterproof textile laminates.
It is furthermore an object of this invention to reduce the width of the seams in garments made of waterproof textile laminates.

It is therefore an object of this invention to produce long-lasting, durable seams in garments made of waterproof textile laminates.
It is furthermore an object of the invention to provide seams which are both strong and flexible.
It is furthermore an object of the invention to provide seams which are strong in the transverse (cross-seam) directions.
A further object of the invention is to provide a textile laminate in which waterproof seams can be formed from the native textile material of the laminate.
It is furthermore an object of the invention to provide a waterproof seam between the edges of at least two waterproof and water vapor permeable textile laminates with a textile layer outside.
Another object of the invention is to provide a seam which is not visible on the outside of a construction made of waterproof textile laminates.
A further object of the invention is to provide seam junctions without layering of the involved textile laminate layers.
Another object of the invention is to provide a seam, wherein the edges of the seam are largely protected from fraying.

These and other objects of the invention are solved by providing a waterproof welded seam formed in an edge area between at least two textile laminates wherein the edges of the laminates are oriented in an edge-to edge butted orientation to each other.

The present invention involves the use of textile laminates which contain bi-component materials. Such bi-component materials comprise a first thermoplastic component which melts at a higher temperature and a second thermoplastic component which melts at a lower temperature. Bi-component materials are described in patent publications WO99/16616 and WO99/16620 (W.L.Gore & Associates Inc.).

Thus, the present invention provides a waterproof welded seam formed in an edge area of a combination of at least a first laminate having a first edge and a second laminate having a second edge; each of the laminates comprising a waterproof functional layer and at least one textile layer laminated to said functional layer and said textile layer being made from yarns comprising at least a first component and a second component, the first component being stable to a first temperature and the second component melting at a second temperature, wherein the first temperature is higher than the second temperature, and wherein the seam is formed by the melted second component and the non-melted first component of the textile layer of each laminate, and the first edge is oriented to the second edge in an edge-to-edge butted orientation.

The invention also relates to a method of joining at least two pieces of waterproof laminate by forming a welded waterproof seam, said method comprising
a) providing at least two waterproof laminates, each of said laminates comprising at least a waterproof functional layer laminated to a textile layer, said textile layer being made of yarns comprising at least a first component and a second component, the first component being stable to a first temperature and the second component melting at a second temperature, wherein the first temperature is higher than the second temperature, and each of said laminates having at least one edge;
b) placing the at least two laminates together so that the textile layers contact one another and at least one of the edges of one laminate is aligned with at least one of the edges of at least one other laminate to form an edge area;
c) welding and pressing said edge area together at using a temperature within the melting range of the second component and below the first temperature such that the second component melts and forms a seam between the pieces;
d) cutting the seam allowance; and
e) welding and pressing the seam together to reorient the aligned edges of the laminates in an edge-to-edge butted orientation.
Preferably step c) and step d) proceed simultaneously.
In one embodiment step c) and step e) proceed at the same temperature. In another embodiment the temperature at which step c) is carried out is different to the temperature at which step e) is carried out. In one embodiment the welding steps are carried out using ultrasonic energy to heat up the second component. Preferably the welding and pressing steps are continuous prosesses using a horn and a rotary anvil. This leads to a constant distribution of the temperature and the pressure in the edge area and therefore leads to a constant welded seam.

A welded seam between at least two pieces of waterproof laminate is obtaining by the method according to claim 1.
The invention relates to waterproof constructions like garments, bivouac bags, shelters (including tents) etc., having such welded seams and also relates to methods of seam sealing.
The invention also relates to an article comprising a plurality of pieces of waterproof laminate and having at least one welded seam between at least two of said pieces produced by the method of claim 1.

According to the present invention it has now been discovered that the orientation of a welded seam in an edge-to-edge butted orientation results in a flat and flexible seam between the laminate edges. The inventive seam improves the comfort of a garment because the seam thickness is not greater than the laminate thickness. The edge-to-edge butted orientation of the welded seam is also preventing a layering of the involved laminate pieces in seam junctions and therefore each seam junction is softer and thinner than in the past. This results in a substantial unit thickness of the inventive welded seams and the welded seam junctions. This leads to a reduction in manufacturing complexity of the seams because the welding parameters of the welding equipment are equal for the seams and for the seam junctions.

Both the first and the second component of the textile layer participate in the welded inventive seam. The second component melts and provides sealant material for joining the laminate edges together. Furthermore the melted second component encapsulates the first component and the functional layer whilst the first component and the functional layer remain stable. Therefore the second component provides the waterproof barrier and the first component provides structure and strength to the edge-to-edge butted seam.

The welding and pressing steps leads to a re-orientation of the laminate edges of the welded seam to an edge-to-edge butted orientation. This leads to a reduction in seam bulk thus reducing the stiffness of the seam and increasing the comfort to the wearer. The welding and pressing steps further leads to that the welded seam and the laminate edges are not visible on the outside of the combination, therefore allowing the combination to be made in an aesthetically pleasing manner. Furthermore the edges are encased by the melted second component, thus being largely protected from fraying.
The inventive welded seams are strong and flexible as demonstrated by the Instron tests below. The reorientation of the edges in an edge-to-edge butted orientation leads to a strong structure within the seam, because the peel-stress is spread out over the whole cross-section of the seam.

The second component of the textile layer of the laminate is a material with a low melting temperature and preferably melts at a second temperature in the range 160°C to 230°C. The first component is a material which is stable, i.e. does not melt or otherwise disintegrate, to a high temperature. Preferably the first component is stable to a first temperature of at least 180°C. i.e. does not melt at a temperature below 180°C. For a reliable seam to be formed, the difference between the first temperature and the second temperature is preferably at least 20°C. Therefore the first and the second component have to be chosen in dependence of their individual melting points so that the melting point of the first component is always higher then the melting point of the second component.

The first component is generally selected from the group of polymers comprising cellulose; protein fibers including wool and silk; high melting point polyolefins, polyester, co-polyester, polyamide or co-polyamide. Preferably, the first component is a polyamide such as polyamide 6.6 (nylon).
The second component in the second layer is a thermoplastic material which is selected from the group of low melting thermoplastics comprising co-polyester, polyamide, co-polyamide and polyolefins such as polypropylene. In a preferred embodiment, the second component is a polyolefin, such as polypropylene. Preferably, the second compound is a polyamide such as polyamide 6.
A particularly preferred embodiment of the invention employs polyamide 6,6 as the first component (melting point around 255°C) and polypropylene (melting point around 160°C) as the second component.
The textile layer (generally the outer layer) is composed of a plurality of yarns in the form of strands, filaments, threads or fibers. Furthermore, the layer is a knitted, woven or non-woven textile layer.
The yarn in the textile layer is in one embodiment a composite fiber comprising the first component and the second component. A composite fiber having two components is sometimes termed a "bi-component" fiber. Suitable bi-component fibers for use in the invention include an eccentric-sheath-core configuration, a concentric-sheath-core configuration, wherein the second component forms the cover, an "island-in-sea" configuration, a wedge-core configuration, a wedge configuration or a "side-by-side" configuration. However, in the preferred embodiment of the invention, a mixture of co-mingled discrete fibers or filaments is used, one fiber being formed of the first component and the other fiber being formed of the second component.
If required, more than two components, each having a different melting point, may be used.
The first layer (functional layer) of the laminate may be a membrane or a film. It may be selected from the group of materials consisting of polyesters, polyamides, polyketones, polysulphones, polycarbonates, fluoropolymers, polyacrylates, co-polyether esters, co-polyether amides, polyurethanes, polyvinylchloride, polytetrafluoroethylene or polyolefins. Preferably, the first layer is formed from expanded polytetrafluoroethylene (ePTFE). Expanded polytetrafluoroethylene is known to be very waterproof and highly breathable. The ePTFE may be provided with a coating of a hydrophilic polymer in a known manner. Such laminates may provide a water-vapor transmission rate of greater than 1500g/m²/day (particularly greater than 3000g/m²/day) and a water entry pressure of greater than 0.13 bar.

Alternatively, the waterproof water-vapor-permeable layer may be constituted by a monolithic sheet of water-vapor-permeable polymer; or by a coating of the polymer on a flexible substrate (e.g. a woven or knitted substrate).

In a preferred embodiment the seams formed between the laminates of the present invention are sufficiently waterproof so that they are able to withstand a water entry pressure of at least 0.07bar, preferably at least 0.13bar and most preferably at least 0.2bar according to the Suter test described herein.

Normally, the seams are intended to be resistant to passage of liquid water. However, by suitable choice of materials and adhesives they may be resistant to passage of vapors of chemicals such as NH₃, HCl, H₂S, SO₂ and organic substances.

The welded seam according to the present invention may be reinforced by at least one reinforcement. Possible reinforcements are waterproof tapes, threads in a zic-zac or double stitch pattern, or waterproof textile laminates. Preferred reinforcements are partially meltable threads or thin seam tapes. The partially meltable threads comprise at least one component melting at a temperature in the range of from 160°C to 230°C. The reinforcements may improve the seam strength or the waterproofness of the seam. Based on the reduced width of the inventive seam the reinforcements have very small dimensions and therefore the seam with reinforcements is still soft and flexible.

The inventive seam has a seam thickness equal to the laminate thickness. In one embodiment each of the laminates and the welded seam has a maximum thickness of 0,3µm. In a further embodiment each of the laminates has a laminate thickness of 0,9µm and the welded seam has a seam thickness of 0,9µm.

In another embodiment of the present invention the welded seam is non-linear and forms curved seams. Curved seams can be produced in a continuous welding process and are preferred in fashionable garment designs.

Furthermore the welded seam in accordance with the present invention is in form of at least one curvature to form a three-dimensional construction. Such curvature-form is favorable to form for example the shoulder area of a garment.

The invention will now be described in contrast to the prior art and in conjunction with the attached drawings wherein:
Figure 1 shows schematically a conventional welded flat seam which is disclosed in the prior art;
Figure 2 shows schematically an additional type of a conventional welded seam according to prior art;
Figure 3 is showing a conventional welded seam formed by bonding surfaces of polyurethane membranes to each other by melting according to prior art;
Figure 4 is a cross-sectional view of a bi-component laminate used to form a seam according to the present invention;
Figures 5a-5e show schematically the steps in formation of the welded seam according to the present invention;
Figure 6 shows a T-junction between three layers of waterproof laminates comprising bi-component textile layer;
Figure 7 is a cross-sectional view of the T-junction according to figure 6;
Figure 8 is a cross-sectional view of the welded seam according to the invention with a reinforcement tape on the inner side of the welded seam;
Figure 9 is a cross-sectional view of the welded seam according to the present invention with a reinforcement in form of a bi-component-thread over the inner side of the welded seam;
Figure 10 shows a first and a second bi-component laminate in a curved pre-cutted form to build a curved welded seam;
Figure 11 shows schematically a curved welded edge-to-edge seam between bi-component laminates;
Figure 12 shows the welded seam according to the invention with a curvature;
Figure 13 shows the curved welded seam according to figure 8 after turning the inside out;
Figure 14 shows a garment comprising edge-to-edge seams and curved edge-to-edge seams according to the present invention;
Figure 15 shows a microscopic picture of one embodiment of the welded seam according to the present invention;
Figure 16 shows a microscopic picture of a second embodiment of the welded seam in an un-flattened structure;
Figure 17 shows a microscopic picture of a second embodiment of the welded seam in a flattened structure;

### Detailed description of the drawings

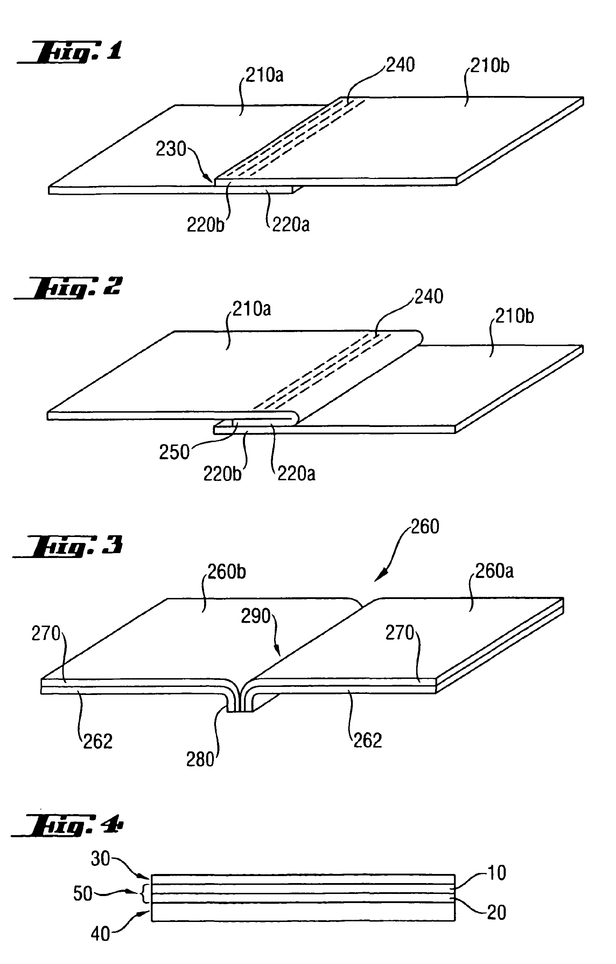

The figures 1 to 3 show conventional welded seams as known in the prior art.
Figure 1 illustrates a conventional welded seam formed between two layers of a waterproof textile laminate 210a, 210b. The edge 220a of a first laminate layer 210a is set onto the uppermost edge 220b of a second laminate layer 210b and welded with the aid of heat and pressure. The edges 220a, 220b are heated and pressed one above the other to weld a bond between the edges.
A problem with this conventional seam is that the edge line 230 of the second laminate layer 210b is visible on the outside of the construction. The welded track 240 is also visible on the outside. That means aesthetical limitations in a garment. Furthermore the edges 220a, 220b provide limited protection from fraying because the edges themselves are without any protection.

Figure 2 shows an alternative type of a conventional welded seam between textile laminate layers 210a, 210b. The first laminate layer 210a is stacked over the second laminate layer 210b with their edges 220a, 220b in alignment with one another. The seam extends along the length of the overlapped edges and forms a strip 250 defining a seam line. Formation of this seam may be carried out by application of heat and pressure along said strip 250, with heat being applied continuously in the form of ultrasonic energy. The strip 250 is folded flat against an adjacent surface of the second laminate layer 210b and heat and pressure are applied to the folded strip 250 and the second laminate layer 210b against which the strip 250 is folded. Such a welded seam has the disadvantages that the welded track 240 is visible on the outside and that seam thickness is high. Especially in seam junctions there is the problem that the number of layers forming the seam will increase. For example in a T-junction five layers of laminate pieces have to be weld together. Furthermore the edges 220a, 220b of the laminates have a limited edge fraying protection.

Figure 3 shows a welded seam formed by bonding surfaces of polyurethane membranes 260a, 260b to each other by melting them. One type of such a seam is disclosed in WO 02/24015. The seam is a transverse welded join between the two edge portions of two pieces 260a, 260b of a laminate comprising at least one layer made of polyurethane.
Each laminate 260a, 260b comprises a base fabric 262 which comprises a support made of two types of yarn and a closed-loop pile formed by a third type of yarn. To the base fabric 262 a coating 270 is laminated consisting of an outer skin layer, an inner skin layer and an adhesive.
The base fabric 262 is elastic, and can be made of at least two types of yarn, one at least of which is elastic, the other yarn is preferably in-extensible. Preferably both yarns are synthetic, such as polyester for a first yarn and an elastic resin as polyurethane or nylon for a second, elastic yarn. The yarn for the pile may be for instance any natural yarn.
The coating 270 is destined to form the outside layer of the laminates 260a, 260b and is preferably formed of one or more layers of polyurethane resin. The outer skin layer is not hydrophilic whilst the inner layer is hydrophilic, or vice versa. The outer layer may have a higher melting point than the inner layer, or vice versa, or the melting points may be substantially the same.
The adhesive is preferably formed of a hydrophilic polyurethane resin.
The skin layers and the adhesive may together have a thickness of about 15 to about 20 microns.
The laminates 260a, 260b are impermeable to water but permeable to water vapor.

Joints are made between portions 260a, 260b of the laminate by welding, preferably by ultrasonic welding. In order to weld, the portions 260a, 260b of the laminate can be placed face to face with the respective skins in contact. During the welding at least one of the skin layers and the adhesive layer melt and re-set so that the join is formed by the skin and the adhesive. If desired also at least one of the yarns of the support melt, and subsequently reset. The pile does not melt. In one embodiment all of the edge zones 280 are trimmed away, and the welding and cutting can be done in one operation.
A welded seam according to figure 3 has several drawbacks. Such seams are known only in connection with polyurethane laminates, especially where polyurethane layers can be used to melt for a seam. But laminates and seams with a polyurethane layer outside are not usable in cases where a textile layer on the outside is needed as in fashionable apparel.
Furthermore a fraying of the seam is possible because at least the non-thermoplastic pile is not melted and can fray out. In case that only the skin and the adhesive is melted, the risk of fraying is increased.
Furthermore the seam strength of such a seam is very poor because the peel stress is directed in the same direction as the orientation of the laminate edges within the seam. Therefore all forces are concentrated on the peel stress line 290.
To obtain a strong joint high weights of the base fabric 262 are necessary, leading to heavy laminates and reduced breathability.
Furthermore in a seam junction there is a layering or an accumulation of laminate layers which results in thick and stiff seam junctions.
Such accumulations lead to burned spots as long an ultrasonic technology with constant gap and amplitude is applied.

In another embodiment of WO 02/24015 hydrophilic polyurethane can be used for both the skin layer and the adhesive layer in order to make the laminates 260a, 260b permeable to water vapor as well as being impermeable to water. But a hydrophilic polyurethane on the outside will absorb liquids in any form and swell up. That leads to a significant decrease of the wet strength of the laminate and the joint.

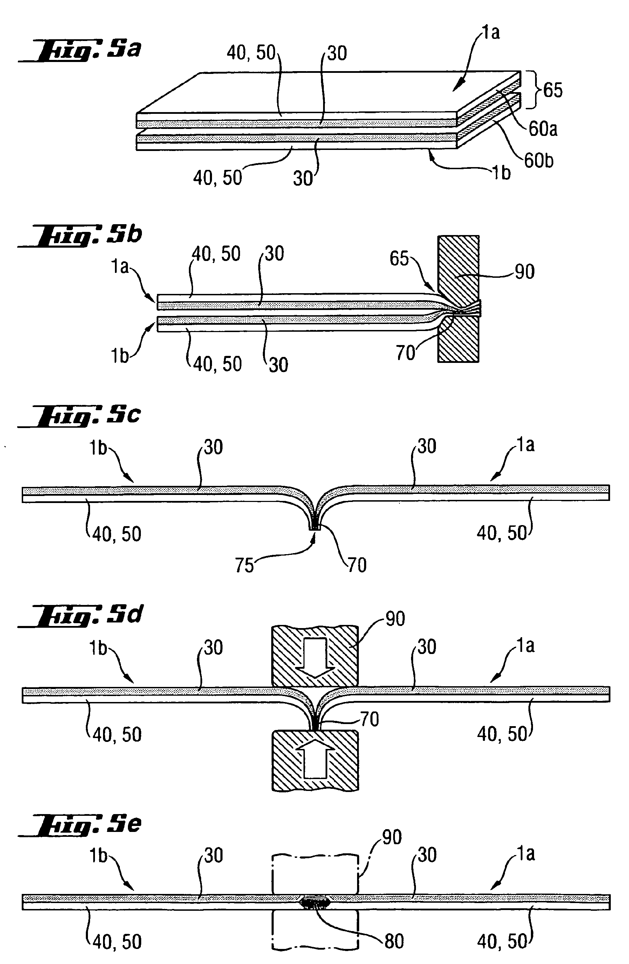

Figure 4 shows a thermoplastic bi-component material of the type described in patent publications WO99/16616 and WO99/16620. The waterproof bi-component laminate 1 comprises a knitted or woven textile layer 30 comprising one or more bi-component yarns laminated thereto a waterproof functional layer 50, which comprises a waterproof, water-vapor permeable membrane. In one embodiment the functional layer 50 is composed of a porous polymeric layer 10 and a water-vapor-permeable polymer layer 20 formed of a hydrophilic polymer. On the other side of the functional layer 50 may be laminated thereto a fabric layer 40. The fabric layer contains preferably a bi-component textile layer to improve the seam strength and the waterproofness of the inventive welded seam.
The porous polymeric layer 10 may be a microporous polymer membrane having a microscopic structure of open interconnecting microvoids. It exhibits air permeability and as such imparts, or does not impair water-vapor-permeability. The microporous membrane used is typically of a thickness 5 microns to 125 microns, most preferably of the order 5 microns to 25 microns. The microporous membrane may be formed of plastic or elastomeric polymers. Examples of suitable polymers include polyesters, polyamides, polyolefins, polyketones, polysulphones, polycarbonates, fluoropolymers, polyacrylates, polyurethanes, copolyether esters, copolyether amides and the like.
The preferred microporous polymer membrane material is expanded microporous polytetrafluoroethylene (ePTFE). This material is characterised by a multiplicity of open interconnecting microscopic voids, high void volume, high strength, softness, flexibility, stable chemical properties, high water-vapor transfer and a surface that exhibits good contamination control characteristics. US Patents US-A-3,953,566 and US-A-4,187,390 describe the preparation of such microporous expanded polytetrafluoroethylene membranes.

The continuous water-vapor-permeable polymer layer 20 is generally a hydrophilic polymer. The hydrophilic layer selectively transports water by diffusion but does not support pressure-driven liquid or air flow. Therefore, moisture, i.e. water-vapor, is transported but the continuous layer of the polymer precludes the passage of airborne particles, micro-organisms, oils or other contaminants. This characteristic equips the textile material and articles made from it (such as garments, socks, gloves, shoes etc.) with good contamination control characteristics by functioning as a barrier to contaminants. Furthermore, the water-vapor transmitting characteristics of the material provide comfort for the wearer.

The continuous water-vapor-permeable polymer layer 20 is typically of a thickness between 5 microns and 50 microns, preferably between about 10 microns and 25 microns. This thickness has been found to be a good practical balance to yield satisfactory durability, continuity and rate of water-vapor transmission. Although not limited thereto, the continuous water-vapor-permeable polymers of the layer 20 are preferably those of the polyurethane family, the silicone family, the co-polyether ester family or the co-polyether ester amide family. Suitable co-polyether ester hydrophilic compositions may be found in US-A-4,493,870 (Vrouenraets) and US-A-4,725,481 (Ostapachenko). Suitable hydrophilic compositions are described in US-A-4,2340838 (Foy et al). Suitable polyurethanes may be found in US-A-4,194,041 (Gore). A preferred class of continuous water-vapour-permeable polymers of polyurethanes, especially those containing oxyethylene units are described in US-A-4,532,316 (Henn). Typically these materials comprise a composition having a high concentration of oxyethylene units to impart hydrophilicity to the polymer. The concentration of oxyethylene units is typically greater than 45% by weight of the base polymer, preferably greater than 60%, much preferably greater than 70%.
The functional layer 50 can be prepared according to the teachings of US-A-5,026,591 (Henn et al).

The laminate 1 of the current invention is preferably provided with a fabric backer layer 40. The backer layer 40 may be either woven, non-woven or knitted and may be made from a variety of materials such as polyester, polyamide (nylon), polyolefins and the like. In one embodiment the backer layer 40 may be a bi-component textile layer such as the bi-component textile layer 30 described in detail herein. The backer fabric 40 may be laminated to one side of the functional layer 50 by standard lamination processes. In particular, a dot pattern of liquid heat-curing adhesive may be applied onto one side of the functional layer 50 by a gravure roll. Lamination then occurs by passing the materials between the pressure rollers and curing.

The textile layer 30 is usually a woven or knitted textile layer made from yarns, composed of strands, filaments, threads, fibers having at least two components or fiber blends.
The first component is a material which is stable to a first temperature, i.e. does not melt or otherwise disintegrate. The first component is stable to a first temperature of at least 180°C. i.e. does not melt at a temperature below 180°C. In one embodiment the first component is a material which is stable up to a high temperature e.g. around 260°C. In another embodiment the first component is not meltable but will disintegrate at a certain temperature (like Kevlar-material). The second component is made of a material which melts at a low melting second temperature. In one embodiment the second component is a material with a lower melting temperature in the range 160°C to 230°C. The first temperature has to be higher than the second temperature.

The at least two components in the knitted or woven bi-component textile layer 30 may be made up of two different co-mingled types of strands, filaments, threads or fibers. Alternatively, a bi-component yarn is used. The bi-component yarn may have either a core-sheath structure, an "islands-in-the-sea" structure or a "side-by-side" structure. Table 1 of WO99/16616 shows possible commercial bi-component yarns which may be used in the present invention.
According to one embodiment of the invention the second component in the bi-component layer is a thermoplastic which is selected from the group of low melting thermoplastics comprising co-polyester, polyamide, co-polyamide or polyolefin. In the preferred embodiment of the invention the second component is a polypropylene or a polyamide 6.0.
The first component is selected from the group of polymers comprising cellulose, protein fibers including wool and silk, high melting polyolefins including polypropylene and polyethylene, polyester, co-polyester, polyamide or co-polyamide. Preferably the first component is polyamide 6.6.
Basically the two components have to be chosen in a way that the first component has always a higher melting point than the second component. Preferably the difference between the first temperature and the second temperature is at least 20°C.

In a preferred embodiment of the invention, the two components of the knitted or woven textile layer 30 are either polypropylene and polyamide; polypropylene and polyethylene; or different grades of polyamide (e.g. polyamide 6 and polyamide 6.6).

A particularly preferred embodiment comprises a yarn which is a 60:40 blend of 78 dtex polypropylene multi-filaments and 44 dtex polyamide multi-filaments (i.e. 78f25/44f13).
The textile layer 30 may have two thermoplastic components. However, three or more thermoplastic components may be included if desired for particular purposes. A bi-component or multi-component yarn for use in forming the layer 30 may be made by a variety of prior art techniques. For example, a number of filaments of the different components of the textile layer 30 can be mixed together to form a yarn of a given metric number (Nm) or dtex. The metric number (Nm) of a yarn is given by the following formula Nm = 10,000/dtex. Typically the metric number is from 70 to 90. Thus, a 25 filament yarn of 84 decitex totally is designated herein as (84f25). The multi-component yarns can be knitted or woven together using known techniques. The bi-component textile layer 30 is laminated onto one side of the functional layer 50 by a lamination process similar to that described above with respect to the fabric backer layer 40. Care must be taken during the lamination process that the low melting (or high melting) component does not melt significantly during the lamination process.
A propellant may be included in the bi-component layer 30, as described in WO99/16616.

The seam according to the present invention is formed in the manner described in conjunction with Figures 5a) to 5e). Figure 5e) shows the inventive seam 80 joining together a first bi-component laminate 1a and a second bi-component laminate 1b at their edges. It is to be understood that the seam 80 can generally be produced out using conventional welding machines. The seam 80 is formed by pieces of laminate 1a, 1b of the type shown in Figure 4 and described above. However, the use of the bi-component laminate material 1 as shown in Figure 4 results in a welded flat seam 80 with a edge-to-edge butted orientation of the laminate edges.

Thus, the seam is formed between adjacent pieces of laminate 1a, 1b as shown in Figure 5a). Each laminate contains fabric backer layer 40, waterproof breathable functional layer 50 (formed of porous polymeric layer 10 and hydrophilic water-vapor-permeable polymer layer 20), and bi-component textile face layer 30 which is a woven or knitted textile material. The textile material may be bulky since the use of the bi-component yars provides good seam sealing. Face layer means that the bi-component textile layer 30 forms the face fabric and is destined to form the outside layer of the laminate 1a, 1b, i.e. it is on the outside of the construction such as a garment, facing away from the wearer. The inside of the laminate 1a,1b is formed by the backer layer 40. The first laminate 1a has a first edge 60a and the second laminate 1b has a second edge 60b.

The first laminate 1a and the second laminate 1b are placed face to face with the respective bi-component layers 30 and the edges 60a, 60b (edge on edge) in contact. The first edge 60a and the second edge 60b forming an edge area 65.

The two laminates 1a, 1b have to be joined or fused together to form a pre- seam 70 in the edge area 65 as illustrated in Figure 5b). The pre-seam 70 is produced if the bi-component textile layers 30 in the edge area 65 are supplied with enough energy to reach a temperature higher than the second temperature of the second component but lower than the first temperature of the first component. The second component melts and provides sealant material (adhesive) for joining the first laminate 1a to the second laminate 1b at said pre-seam 70. Both the first and the second component participate in the structural joint. The second component encapsulates the first component whilst the first component remains stable. The second component provides the waterproof barrier and the first component provides structure and strength to the seam.
In case the backer layer 40 is chosen as a bi-component textile layer, in the edge area 65 the second component of layer 40 will also melt whilst the first component of layer 40 remains stable. Such combination of bi-component layers 30, 40 results in a high strength of the pre-seam 70.

A method of adding energy to the bi-component textile layers 30 to form the pre-seam 70 is to use ultrasonic welding techniques to heat up the second components. Other welding techniques are also usable like contact welding or impulse welding.
An inventive preferable method of bonding bi-component layers is through the use of ultrasonic energy for example with a Sonotrode. Heat can be generated locally at the edge area by applying ultrasonic energy through an ultrasonic horn and anvil system. Preferably, it may be accomplished in a continuous process using a horn and a rotary anvil. The horn vibrates up and down at an pre-defined selected frequency and with adjustable amplitude. The edge area 65 of the laminate 1a, 1b can pass between the tip of the anvil and the horn and welded together. The distance between the anvil and the horn is 0.1mm-0.5mm. The speed of the Sonotrode is controlled to obtain suitable welding. The slower the speed, the hotter the welding.
In one embodiment the pre-seam 70 is made using a combined ultrasonic welding and cutting machine. The cutting step is carried out during or after the welding step and removes the seam allowance formed during the welding step. In that case the distance between the anvil and the horn is zero.
An ultrasonic machine 90 (for example Pfaff 8310 using a Sonotronic Sonotrode) can be used to weld and cut the pre-seam 70 in one step.

The energy input of the ultrasonic machine 90 is chosen to be greater than that of the melting temperature of the second low melting temperature component but to be below the high melting temperature of the first component of the bi-component textile layers 30. Typically the welding process is at a temperature of between 150°C and 240°C. Under these conditions, the low melting temperature components in the bi-component textile layers 30 melt and, due to the pressure exerted on the laminates 1a and 1b by the welding die, the bi-component textile layers 30 fuse together. The low melting component fills the gaps in the bi-component textile layer 30 between the structure formed by the fibers having a higher melting temperature. The higher melting temperature fibers serve therefore two functions. Firstly they provide mechanical strength to the seam. Secondly they act as a "gap-keeper" or spacer to ensure that the lower melting temperature fibers in the molten state to not seep out of the pre-seam 70.

During the welding process the seam allowance is cut away therefore the seam edge is without a seam allowance. Along the cutting line a higher temperature might occur and melt all components.

After the welding and cutting process the two laminates 1a, 1b are opened up as is illustrated in Figure 5c). The two laminates 1a, 1b substantially lie in one plane and are connected to each other via the pre-seam 70. The layers forming the seam in the edge area are in a substantial transverse direction. The pre-seam edge 75 is formed like a peak between the laminates 1a, 1b.

Figure 5d) shows a further step in making the inventive seam 80. An additional welding process is applied to the pre-seam 70 to flatten the seam. The additional treatment is made by means of a hot tool or ultrasonic machine. In one embodiment the welding machine 90 without the cutting device is heats and presses down on the welded pre-seam 70. The additional welding may be done on one side of the seam or on both sides of the seam and causes a re-melting of the already melted material of the second component. The pressure causes a new orientation of the transverse oriented layers within the pre-seam 70 to a substantial straight direction. The first edge 60a and the second edge 60b of the laminates 1a, 1b reorient in an edge-to-edge butted orientation. Therefore the peak-like seam edge 75 will be formed to a flat seam line.

Figure 5e) shows the finished inventive seam 80. Because of the additional welding step the edge-to-edge butted seam 80 has maximal the same thickness as the laminate 1a or 1b itself. The seam thickness is between 0.2µm to 0.9µm depending on the thickness of the laminates. Furthermore the remelting and pressing down of the pre-seam 70 in an opposite direction to the first welding process leads to a reorientation of the layers, especially the edges, within the seam. Especially the functional layer 50 is oriented in a more or less straight direction. The ends of the edges of at least the functional layer 50 are embedded completely in the melted material of the second component. The bi-component textile layer 30 and the backer fabric layer 40 are in a horizontal and straight direction. This leads to a pull stress over the whole cross section of the seam 80 instead of a peel stress along the seam line 290 of conventional seams according to figure 3. The seam 80 has a high seam strength especially in the case using two bi-component layers 30, 40. Surprisingly the inventive seam is very durable and after several washing processes the seam is still closed and no open areas could be found.
The seam 80 is waterproof and a fraying of the laminate edges is durably prevented.
The width of the seam 80 formed is between 0,2mm and 1,5mm depending on laminate thickness and process data. The seam 80 is soft and very thin. A further advantage is that at seam junctions layers are not accumulated.

Figure 6 shows a top view of one embodiment of the present invention. The figure shows the combination of three pieces of the bi-component laminate 1a, 1b joining together at their edges via a welded seam in the inventive edge-to-edge butted orientation. Each bi-component laminate piece may have a bi-component textile layer with a different color. The three pieces 1a, 1b, 2 are joined together according to the method as described in Figure 5 forming aT-junction.
In a first step the first bi-component laminate 1a and the second bi-component laminate 1b are joined together at a first welded edge-to-edge seam 82. Afterwards, in a second step said combination of first and second laminate 1a, 1b are welded to the third bi-component laminate 2 at a welded edge-to-edge seam 84 according to the present invention.

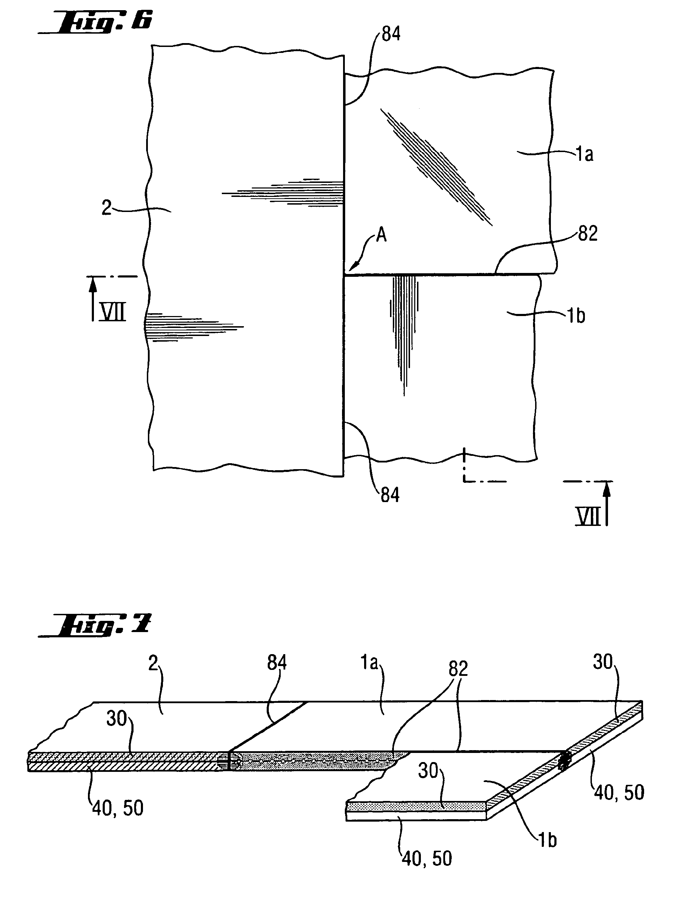

Figure 7 is an enlarged perspective cross-sectional view (line VII-VII) through the seam junction A in Figure 6. The cross-section runs along the welded seam 82, through the welded seam 84 and the third bi-component laminate 2. Surprisingly it was found that there is no layering of the combination of the first and the second laminate and the third laminate 2, nor of the laminate pieces in the junction of seam 82 and seam 84. On the contrary the edges of the first, the second and the third laminate are oriented in a edge-to-edge butted orientation. Therefore all three laminates and the seams between them are in the same plane. In particular the thickness of the seam junction A is the same as of seam 82 or seam 84.

There is no layering of the laminates at seam junctions. The laminates are joined by a butt-like seam. Therefore, the seam at a seam junction is not substantially thicker than the laminate. The joint at the seam junctions is waterproof and tearproof.

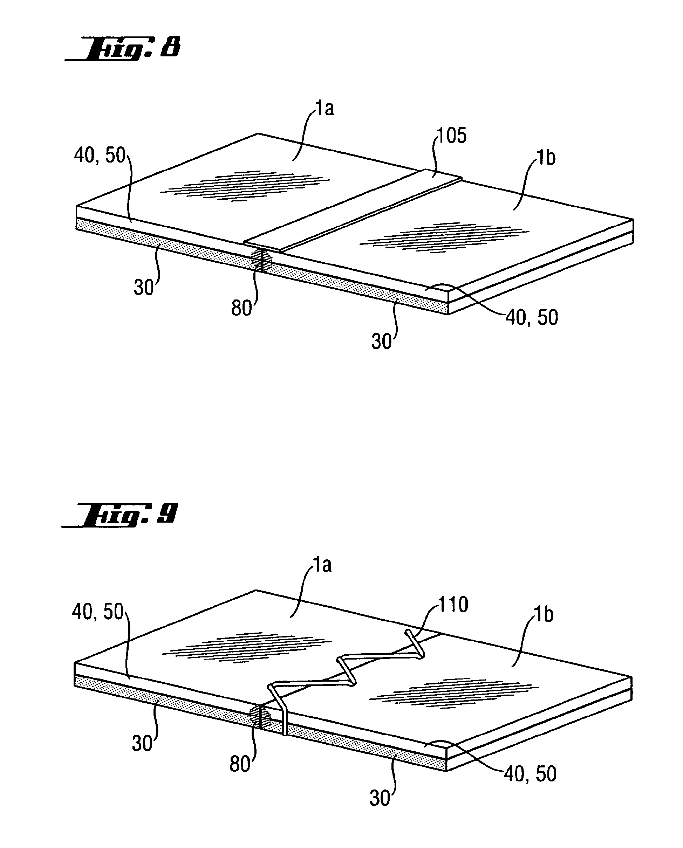

The seam strength may be improved using reinforcements applied to the welded seam. The reinforcements may improve the waterproofness of the seam and/or improve the seam strength.
Preferably the reinforcement is applied to the fabric layer side or on the inner side of the bi-component laminate 1 in an article. Possible reinforcements are textile tapes, waterproof tapes, threads or waterproof textile laminates. In one embodiment of the present invention the reinforcement is in the form of a seam tape 105 as disclosed in figure 8. The seam tape 105 may be secured on either side of the seam 80 itself. For aesthetic reasons, the seam tape 105 is usually applied to the interior of a garment, so that it is hidden from view. Therefore the seam tape 105 is preferably secured to the fabric layer 40.
The seam tape may be a weldable adhesive tape, a weldable textile tape or a weldable laminate tape. Basically a weldable tape comprises at least one thermoplastic component which is meltable at a temperature in the range 80°C to 230°C.
In another embodiment the seam tape 105 may be a thermoplastic film which softens and flows when heated. More usually the seam tape 105 comprises a backing tape having a covering of hot-melt adhesive on one side. After the welded seam 80 has been produced according to the present invention, the seam tape 105 is heated, for example using a blast of hot air so as to melt the adhesive. The tape 105 is then applied over the seam 80 and both are passed through the nip of a pair of pressure rollers in order to squeeze the molten adhesive into the fabric 40 so as to ensure good bonding of the tape to the underlying fabric. Generally, the seam-seal adhesive melts at a temperature above the melting temperature of the second component of the bi-component textile layer 30. This enables the usual seam sealing conditions to be maintained. Preferably, the seam-seal adhesive melts at a temperature 10 to 20°C lower than that of the second component. However, these conditions depend to an extent on rates of heat flow and speed of seam-sealing.

In a further embodiment of the invention the seam tape is applied to the seam during the flattening process as explained to figure 5d). In one example the ultrasonic welding machine has two plates and a distance between the plates. The pre-seam 70 and the seam tape on the pre-seam are transported continuously through the distance and joined together. At the same time the pre-seam is flatten to an edge-to-edge butted orientation.
Surprisingly, the invention also allows the use of very thin (narrow) seam tapes because of the thin welded seam itself and the fact that there is no real seam allowance. Preferably the seam tape has a width of not more than 8-10mm.

Another example of a reinforcement is showed in figure 9. The welded seam 80 is reinforced using a thread 110. In one embodiment the thread is made of bi-component material as described above. In another embodiment the thread is a monofil yarn. The thread 110 may be stitched zic-zac like over the welded seam 80 preferably to the fabric layer 40. After the sewing step, the fabric is heated in the seam area to at least the melting temperature of the second component of the bi-component textile layer 30 and, if used, of the second component of the bi-component thread. However, the temperature to which the seam area is heated should be below the melting temperature of the first component. The heating step may be an additional welding step of the flatted seam 80 or may be done with the flatten step of the pre-seam 70 as described to figure 5d). The molten second component seals the stitching holes in the laminate 1 to keep the seam waterproof.

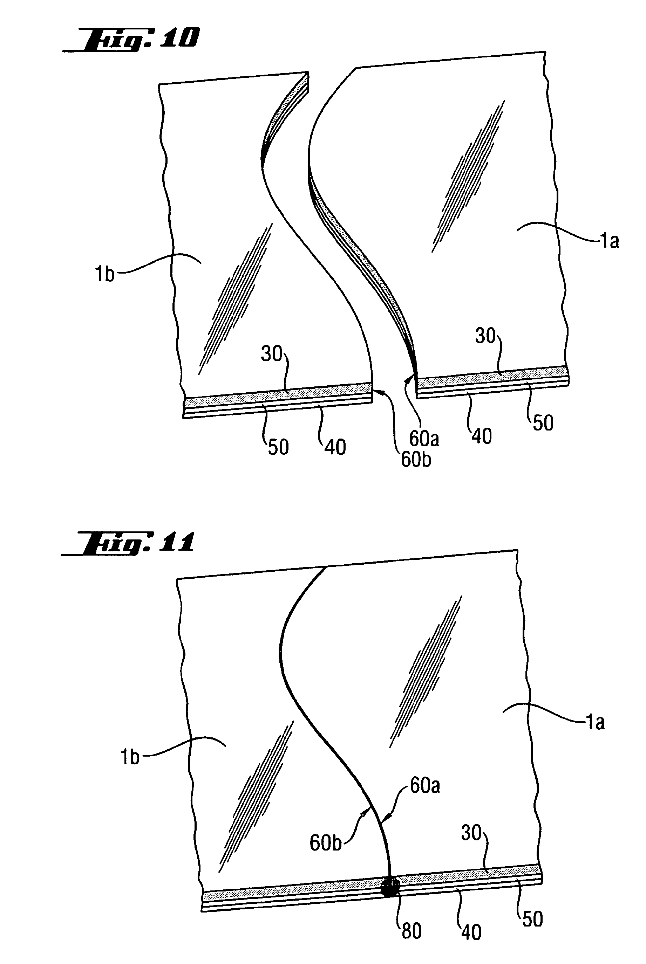

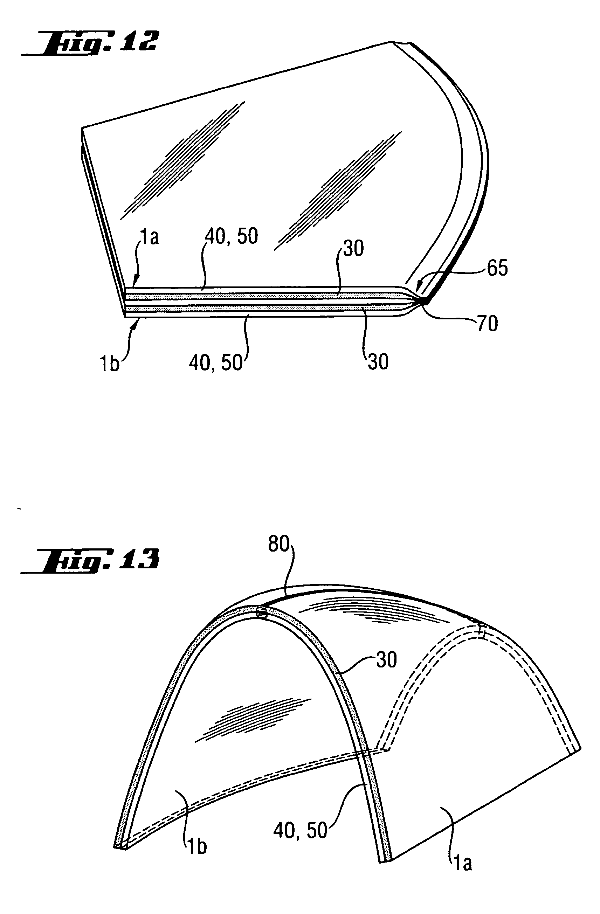

Figure 10 is showing two laminates 1a, 1b which have pre-shaped edges 60a, 60b. The edges 60a, 60b are in a curved form wherein the first edge 60a fits exactly to the second edge 60b.
The combination of the first edge 60a and the second edge 60b is showing in figure 11. The first laminate 1a and the second laminate 1b joined together at a welded seam 80 according to the present invention. The continuous welding step to flatten the seam results in a two-dimensional non-linear sealing line.

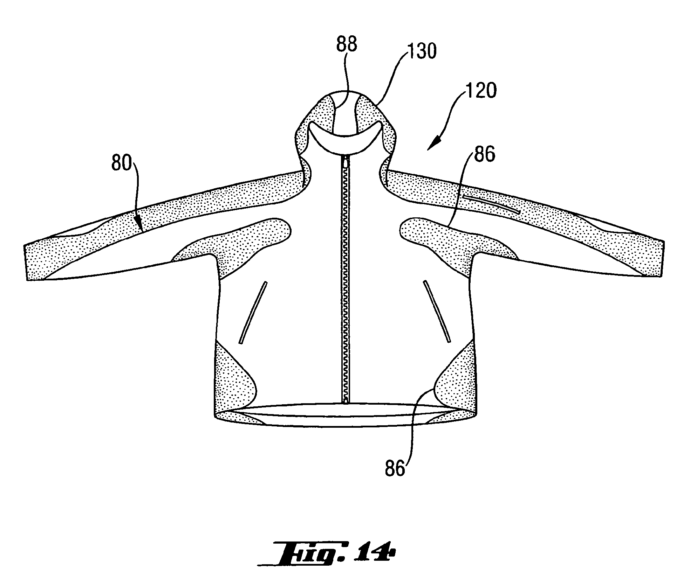

A further embodiment of the present invention is disclosed in Figure 12. The first bi-component laminate 1a and the second bi-component laminate 1b are in the same arrangement as in Figure 5b), the only difference being that the welding machine has created a curved seam line or a non-linear seam instead of a straight seam line as in Figure 5b).
The result of such a curved or non-linear seam line is showing in Figure 13, where the pre-seam 70 is flattened into a welded seam 80 with a three-dimensional curvature. Based on the curvature of the welded seam 80 the final combination comprises a three-dimensional structure. Such three-dimensional structure are helpful for the manufacture of body-shaped garments, for shoulder constructions and pre-shaped hoods.

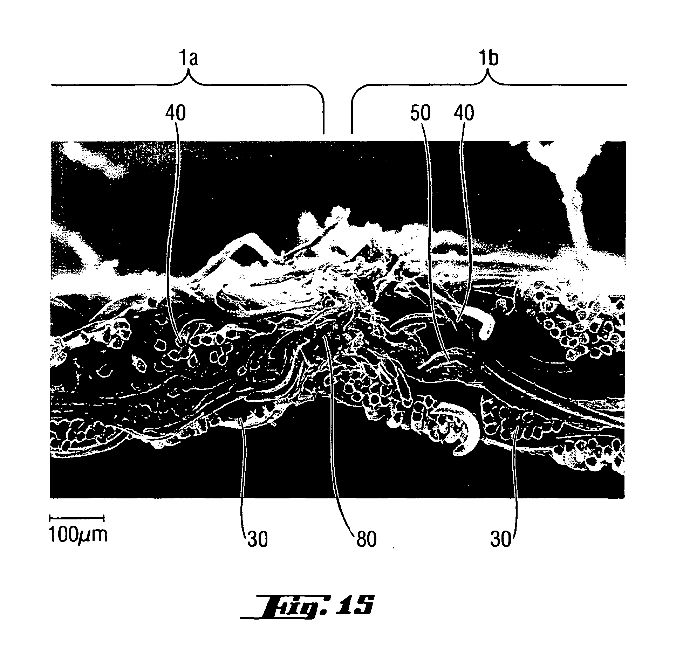

Figure 14 shows a garment 120 made of a plurality of pieces of waterproof laminate. The pieces may have different colors and/or non-linear forms and edges. The pieces joined together by at least one welded seam 80 produced by the method according of the present invention. Especially in the area of the hood 130 there are produced three-dimensional curved welded seams 88. In the area of the body and of the arms there are produced two-dimensional welded seams 86.

### Examples

### Example 1 (Microseam raw)

A seam was formed between two pieces of three layer bi-component laminate. The laminate comprised a woven bi-component textile layer 30 laminated to a waterproof functional layer 50 formed from expanded polytetrafluoroethylene coated with a hydrophilic polymer, and a knitted bi-component textile backer layer 40 laminated to the opposite side of the functional layer 50. The woven bi-component layer comprised a first component (polyamide 6.6, melting point: 255°C) and a second component (polyamide 6, melting point: 225°C). The first and the second component were in form of texturized and intermingled filaments. The bi-component textile layer 30 had a textile weight of 55g/m². The knitted bi-component backer layer 40 had a textile weight of 80g/m² and is also made of polyamide 6.6 as first component and polyamide 6 as second component. The laminate had a thickness of 0.3mm. The first and the second laminate 1a, 1b were first placed face to face with the respective bi-component woven layers 30 in contact. A pre-seam 70 was formed using an ultrasonic welding machine of the type Pfaff 8310 (company Pfaff, Germany) with 16µm amplitude, 35kHz and a velocity of 0.7m/min. The anvil wheel has an angle of 90 degrees and a gap of 0mm. The temperature is around 240°C. The seam allowance was cut during the welding process through the non existing gap. The pre-seam 70 was secondly flattened to become microseam 80 using the same welding machine (Pfaff 8310) and the same settings but with a flat anvil wheel (angle 180 degrees) and with a gap of 0.13mm.

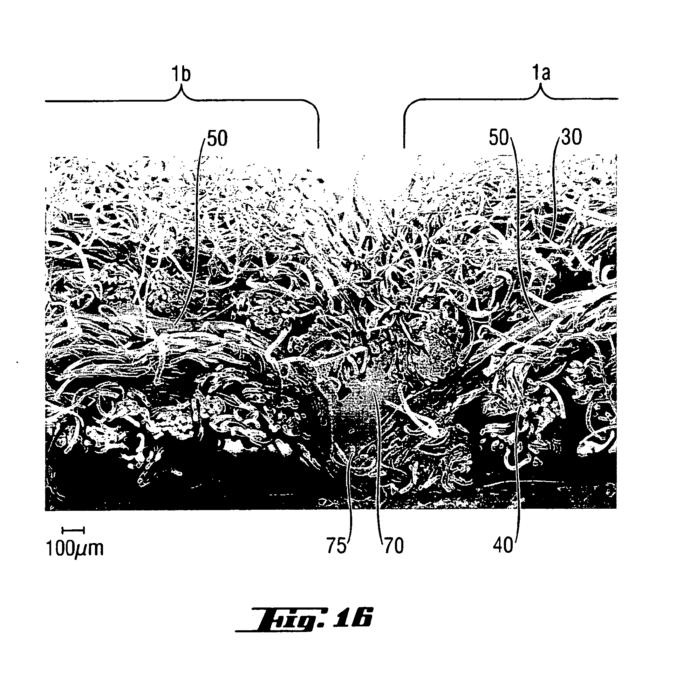

Figure 15 shows an electron micrograph of a cross section of the welded and flattened seam 80. All layers of the bi-component laminate 1a ,1b are substantially in a straight structure and the functional layer 5 is embedded in the melted material of the seam 80. The seam 80 has a width of 0.2mm and a thickness of 0.3mm. The numbers for waterproofness and seamstrength can be seen in Table 1 below.

### Example 2 (Microseam raw)

A seam was formed between two pieces 1a, 1b of a three layer laminate. The laminate comprised a knitted bi-component textile layer 30 with a textile weight of 250g/m². The layer 30 was laminated to a functional layer 50 formed from expanded polytetrafluoroethylene coated with a hydrophilic polymer. The laminate 1 further comprised a knitted bi-component textile backer layer 40 with a textile weight of 110g/m², laminated to the opposite side of the functional layer 50. The bi-component layer 30, 40 comprised a first component (polyamide 6.6, melting point 255°C) and a second component (polyamide 6.0, melding point 225°C). The first and the second components were in form of texturized and intermingled filament yarns. The laminate 1 had a thickness of 0.8mm. The seam 80 was produced in accordance with Example 1 with the exception that for the flattening step the welding machine has a gap of 0.5mm.

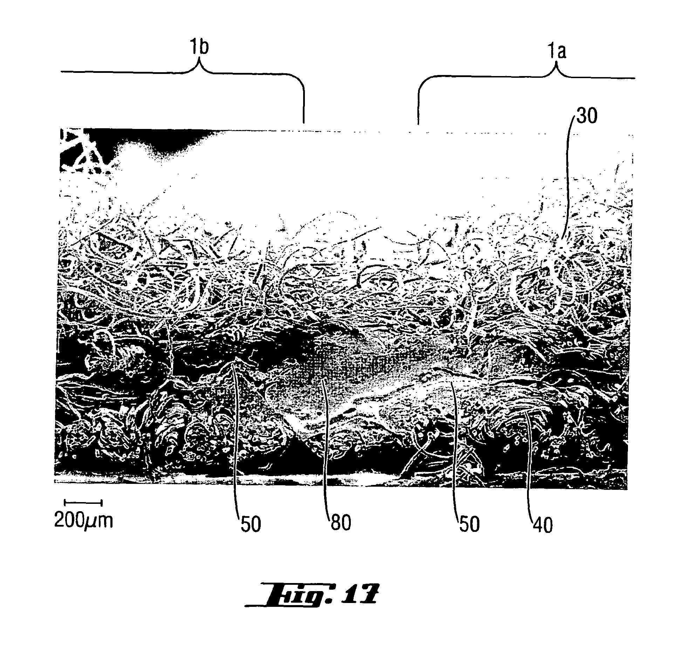

Figure 16 is an electron micrograph of a cross-section of the un-flattened pre-seam 70 after the weld and cut step according to Figure 5b). This results in a pre-seam 70 with a peak-like structure 75.

Figure 17 shows an electron micrograph of a cross-section of the same seam as in Figure 16 but after an additional welding and pressing step to flatten the pre-seam. Therefore the seam 80 is flattened and the edges of each laminate 1a, 1b are re-orientated in an edge-to-edge butted orientation. The seam 80 has a width of 0.6mm and a thickness of 0.8mm. The numbers for waterproofness and seamstrength are shown in Table 1 below. The figure shows that the seam is not visible on the outside of the construction made of the laminates, therefore allowing the construction to be made in an aesthetically pleasing manner. It is further shows that the edge areas of the seam are also not visible on the outside of the construction and that the edges are encased by the melted second component, thus being largely protected from fraying.

### Example 3

A welded seam was formed between two pieces of a three layer laminate. The materials and the welding process are the same as in example 1. In addition a reinforcement in form of a 3 layer bi-component laminate tape is welded on the inner side of the seam using ultrasonic energy. The tape has a width of 6mm and covers completely the seam and adjacent areas of the backer layer 40.

### Example 4

A welded seam was formed between two pieces of a three layer laminate. The materials and the welding process are the same as in example 1. In addition a reinforcement in form of a bi-component thread was stitched over the seam in zigzag form. Afterwards the seam with thread was heated and the molten second component of the bi-component layers and of the thread sealed the stitched holes in the laminate.

### Example 5

A welded seam was formed between two pieces of a three layer laminate. The materials and the welding process are the same as in example 1. In addition a reinforcement in form of a bi-component thread was stitched over the seam in form of a two needle coverstitch. Afterwards the seam with the thread was heated and the molten second component of the bi-component layers and of the thread sealed the stitched holes in the laminate.

### Example 6

A welded seam was formed between two pieces of a three layer laminate. The materials and the welding process are the same as in example 1. In addition a reinforcement in form of a knit band was attached by welding on the inner side of the seam using ultrasonic energy. The tape has a width of 7mm and covered completely the seam and adjacent areas of the backer layer 40.

### Example 7

A welded seam was formed between two pieces of a three layer laminate. The materials and the welding process are the same as in example 1 except that the bi-component materials for the textile layer 30 and the backer layer 40 are in form of fleece with a higher textile weight. Therefore the laminate has a higher weight of 382g/m².

### Example 8

A welded seam was formed between two pieces of a three layer laminate. The welding process is the same as in example 1. The bi-component materials for the textile layer 30 and the backer layer 40 are in form of fleece and made of polyester. The first component is polyethylene terephthalate (PET, melting point 255°C) and the second component is polybuthylene therephthalate (PBT, melting point 225°C) The fleece layers 30,40 have a higher textile weight as in example 7 and therefore the laminate has a higher weight of 440g/m².

### Example 9

A welded seam was formed between two pieces of a three layer laminate. The materials and the welding process are the same as in example 1 except that the bi-component material for the textile layer 30 and the backer layer 40 have a higher textile weight as in example 1. Therefore the laminate has a higher weight of 180g/m².

### Example 10

A welded seam was formed between two pieces of a three layer laminate. The welding process is the same as in example 1. The bi-component materials for the textile layer 30 and the backer layer 40 are made of polyester, whereby the bi-component material for the fabric backer layer 40 is in form of a brushed knit backing material. The first component is polyethylene terephthalate (PET, melting point 255°C) and the second component is polybuthylene therephthalate (PBT, melting point 225°C) The laminate has a high weight of 430g/m².

Table 1 shows the results of measurements made on the laminates and on the welded seams formed between said laminates.
Table 1 gives an overview about the textile weight and the thickness of each used laminate in the examples, and the seam strength of each welded seam. The Suter-Test shows if the welded seams are waterproof (passed) or nor (not passed). The following abbreviations are used:
3L = three layer laminate with an ePTFE (expanded polytetrafluoroethylene) membrane coated with a hydrophilic polymer as functional layer
TL = textile layer 30, FL = fabric backer layer 40, PA = polyamide, BiCo = bi-component textile material

**Table 1**

| Example | Area weight of laminate in g/m² | Thickness of laminate in mm | Seam passed Suter Test? | Seal strength in N |
|---|---|---|---|---|
| 1. Microseam raw | 165 | 0.5 | Passed | 152 |
| 3L: TL and FL=PA BiCo | | | | |
| 2. Microseam raw | 372 | 1.3 | Passed | 288 |
| 3L: TL and FL= PA BiCo FL= brushed knit backing | | | | |
| 3. Microseam with reinforcement in form of a waterproof laminate tape: | 165 | 0.5 | Passed | 218 |
| 3L: TL and FL= PA BiCo | | | | |
| 4. Microseam with thread reinforcement (zigzag) | 165 | 0.5 | Passed | 230 |
| 3L: TL and FL= PA BiCo | | | | |
| 5. Microseam with thread reinforcement (2 needle coverstitch) | 165 | 0.5 | Passed | 255 |
| 3L: TL and FL= PA BiCo | | | | |
| 6. Microseam with reinforcement in form of a knit band | 165 | 0.5 | Passed | 296 |
| 3L: TL and FL= PA BiCo | | | | |
| 7. Microseam raw | 382 | 1.7 | Passed | 232 |
| 3L: TL and FL= PA BiCo fleece | | | | |
| 8. Microseam raw | 440 | 1.9 | Passed | 224 |
| 3L: TL and FL= polyester BiCo fleece | | | | |
| 9. Microseam raw | 180 | 0.6 | Passed | 198 |
| 3L: TL and FL= PA BiCo | | | | |
| 10. Microseam raw | 430 | 1.5 | Passed | 258 |
| 3L: TL and FL= polyester BiCo, FL= brushed knit backing | | | | |

The column "seam passed suter test?" indicates whether the seam formed was able to withstand water at a pressure of 0.13bar for at least 4 minutes. All examples passed the suter test and are therefore waterproof.
The column "seal strength" indicates the seam strength for the welded seam. A value of around 200N is considered very good for a textile seam in garments.
The raw welded seam examples 1, 2 and 6 to 10 (without any reinforcement) show improving seam strengths with increasing laminate weights.

The use of reinforcements in examples 3 to 5 lead to high values for seam strength by using laminates with a relative low weight.

### Definitions and Test Procedures

Functional layer: The term functional layer is used to denote a layer which had the properties that it is both waterproof and water-vapor-permeable. Preferably the functional layer comprises a waterproof, water-vapor-permeable membrane.

Laminate: The term laminate is used to describe the connection of a functional layer with at least one textile layer (two-layer laminate). There are also three-layer laminates which has an further textile layer adhered to the functional layer opposite to the first textile layer.

Yarn: The term yarn in the description is used to describe the continuous strands of material which are made into the textile. It includes strands, filaments, fibers and the like.

Outside: The term outside means the side of a combination or article including the welded seam according to the present invention that forms the visible outer shell of a garment.

Inside: The term inside means the side of a combination or article including the welded seam according to the present invention that forms the inner side of a garment and is directed to the wearer of said garment.

Seam: The term seam means the connection (joint) between at least two pieces of material. The seam allowance is the part of a seam that can be removed after welding by cutting including squeezing.

Edge: The term edge means the outside limit or boundary of a laminate. An edge area is formed if at least a first edge and a second edge are placed face to face for joining together. The term cut edge is defining the surface of the edge generating by cutting.

### Seal Strength Test

The Seal Strength Test was used according to EN/ISO 13935. To determine the strength of a seal, specimens were cut from inflatable modules of the examples in triplicate in both the machine and transverse directions. Samples were 20cm long with the seal in the middle. The seal length was 8cm perpendicular to the axis of pulling. The samples were mounted in an Instron model #1122 equipped with pneumatic clamp jaws to hold the samples firm. The cross head was extended at a rate of 200 mm/min until the sample broke. The load at break and elongation to break was recorded. The average in both the machine and transverse direction were averaged and reported in Table 1.

### Thickness of the laminate/seam

The so-called Snap Gauge Method was used according to ASTM D 1777-64 (reapproved 1975) using a Peacock 20-360 Snap Gauge (M-213) tester. A specimen of at least 5.08 x 5.08 cm was used which been conditioned at 24±2°C and 65±2% relative humidity prior to testing. The presser foot of the tester was lowered onto the specimen without impact. After five seconds a reading was taken. In the sampling pattern used, five specimens were tested and the mean of the five results together with the standard deviation was calculated.

### Weight of the fabric

The weight of the fabric was determined using a 8.9 cm diameter circular sample which had been conditioned at 24±2°C and 65±2% relative humidity prior to testing. In the sampling pattern used, five specimens were tested and the mean of the five results together with the standard deviation was calculated. Any balance accurate to 0.01 g with a draft cover can be used. Further details of the test method are given in ASTM D 3776-96 Option C.

### Water-Vapour-Permeable

Water vapour permeable as used herein is meant having a water-vapour-transmission rate (Ret) of under 150 (m².Pa) / W. The water vapour transmission rate is measured using the Hohenstein MDM Dry Method which is explained in the Standard-Prüfvorschrift (Standard Test Rules) No. BPI 1.4 dated September 1987 and issued by the Bekleidungsphysiologisches Instituts e.V. Hohenstein, Germany.

### Waterproofness

Waterproof as used herein is meant having water-penetration-resistance (hydrostatic resistance) of 0.13 bar or more. This measurement is carried out on laminates by placing a test sample of the laminate with an area of 100 cm² under increasing water pressure. For this purpose, distilled water with a temperature of 20±2°C is used and the rate of increase of the water pressure was 60±3 cmH₂O/min. The water penetration resistance of the sample is then the pressure at which water appears on the opposite side of the sample. The exact method of carrying out this test is given in the ISO Standard No. 811 from 1981.

The measurement is carried out on seams by the so-called Suter test in which a test sample of the laminate including the seam is stretched over a holder. Distilled water with a temperature of 20±2°C was placed under a pressure of 0.13 bar on one side of the seam and the test sample left for at least four minutes. The other side of the seam was investigated using a dark tissue to see whether water penetration through the seam had occurred.

Samples of the present invention were tested for waterproofness using a modified Suter test apparatus, which is a low water entry pressure challenge. Water was forced against the underside of a sample of 11.25cm diameter sealed by two circular rubber gaskets in a clamped arrangement. The sample was mounted with the woven face fabric downwards against the water, the knit layer with the taped seam being uppermost. It is important that a leakproof seal is formed by the clamp mechanism, gaskets and sample. In deformable samples, the sample was overlaid by a reinforcing scrim (e.g. an open non-woven fabric) clamped over the sample. The upper side of the sample with the taped seam was open to the atmosphere and visible to the operator. The water pressure on the underside of the sample was increased to 2 pounds per square inch (0.14 kg/cm²) by a pump connected to a water reservoir, as indicated by a pressure gauge and regulated by an in-line valve. The upper side of the sample was visually observed for a period of one minute for the appearance of any water which might be forced through the sample in the event of lack of waterproofness. Liquid water seen on the surface was interpreted as a deficiency in the waterproofness of the test. The sample passed the trest if no liquid water was visible on the upper side of the sample within the one minute test period.

### Width of seam

The width was measured along the length of a specimen in three locations and averaged to get the seam width for that specimen. Three specimen were tested and the mean of the three results was calculated. The width was measured to the nearest mm using a scale.

## Claims

1. A method of joining at least two pieces of waterproof laminate by forming a welded waterproof seam (80), said method comprising:
a) providing at least two waterproof laminates (1a, 1b), each of said laminates comprising at least a waterproof functional layer (50) laminated to a textile layer (30), said textile layer (30) being made from yarns comprising at least a first component and a second component, the first component being stable to a first temperature and the second component melting at a second temperature, wherein the first temperature is higher than the second temperature, and each of said laminates having at least one edge (60a, 60b);
b) placing the at least two laminates together so that the textile layers contact one another and at least one of the edges (60a) of one of the laminates (1a) is aligned with at least one of the edges (60b) of at least one other laminate (1b) to form an edge area (65);
c) welding and pressing said edge area (65) together at a temperature within the melting range of the second component and below the first temperature such that the second component melts and forms a seam between the pieces;
d) cutting the seam allowance; and
e) welding and pressing the seam together to reorient the said edges of the at least two laminates in an edge-to-edge butted orientation.

2. Method according to claim 1, wherein step c) and step d) are carried out simultaneously.

3. Method according to claim 1, wherein the second component is meltable at a temperature in the range of from 160°C to 230°C.

4. Method according to claim 1, wherein the first component is stable to a temperature of at least 180°C.

5. Method according to claim 1, wherein the difference in temperature between the first temperature and the second temperature is at least 20°C.

6. Method according to claim 1, wherein step c) and e) are carried out at the same temperatures.

7. Method according to claim 1, wherein step c) is carried out at a temperature in the range of from 160°C to 230°C.

8. Method according to claim 1, wherein step e) is carried out at a temperature of 160°C to 230°C.

9. Method according to claim 1, wherein step c) and step e) are carried out using ultrasonic energy.

10. Method according to claim 1, wherein step c) and step e) are carried out in an continuous process.

11. Method according to claim 1, wherein the functional layer (50) is made from expanded polytetrafluoroethylene (PTFE).

12. Method according to claim 1, wherein the seam (80) is reinforced by at least one reinforcement.

13. Method according to claim 12, wherein the reinforcement is selected from the group of materials comprising tapes, threads, textile laminates.

14. Method according to claim 13, wherein the reinforcement is selected from the group of threads comprising at least one component melting at a temperature in the range of from 160°C to 230°C.

15. A combination of at least a first laminate (1a) having a first edge (60a) and a second laminate (1b) having a second edge (60b) joined together at a welded waterproof seam (80) in an edge area (65),
each of said laminates comprising:
a layer (50) comprising a waterproof functional layer and
a textile layer (30) laminated to said layer (50),
wherein said textile layer (30) is made from yarns comprising at least a first component and a second component,
the first component being stable to a first temperature and the second component melting at a second temperature, wherein the first temperature is higher than the second temperature,
and wherein the seam (80) is formed by the melted second component and the non-melted first component of the textile layers of each laminate, and wherein the first edge (60a) is oriented to the second edge (60b) in an edge-to-edge butted orientation.

16. The combination of claim 15, wherein each of the laminates (1a, 1b) has a laminate-thickness and the welded seam (80) has a seam-thickness wherein said seam-thickness is equal to than the laminate-thickness.

17. The combination of claim 15, wherein the welded seam (80) is non-linear.

18. The combination of claim 15, wherein the welded seam (80) is in the form of at least one curvature to form a three-dimensional combination.

19. The combination of claim 15, wherein the welded seam (80) is reinforced by at least one reinforcement.

20. The combination of claim 19, wherein the reinforcement is selected from the group of materials comprising tapes, threads, textile laminates.

21. The combination of claim 20, wherein the reinforcement is selected from the group of threads having at least one component melting at a temperature in the range of from 160°C to 230°C.

22. The combination of claim 15, wherein the second component is meltable at a temperature in the range of from 160°C to 230°C.

23. The combination of claim 15, wherein the first component is stable to a temperature of at least 180°C.

24. The combination of claim 15, wherein the difference between the first temperature and the second temperature is at least 20°C.

25. The combination of claim 15, wherein the seam (80) withstands a water entry pressure of at least 0.13 bar.

26. The combination of claim 15, wherein the seam (80) has a width less than 0.25 cm.

27. The combination of claim 15, wherein the textile layer (30) is composed of a plurality of yarns in the form of strands, filaments, threads or fibers.

28. The combination of claim 27, wherein the yarn has a sheath-core structure, with the second component forming the cover.

29. The combination of claim 27, wherein the yarn has a "side-by-side" structure.

30. The combination of claim 15, wherein the second layer (30) is a knitted, woven or non-woven textile layer.

31. The combination of claim 15, wherein the first component is selected from the group of polymers comprising polyester, polyamide, cellulose or protein fibers.

32. The combination of claim 15, wherein the first component is polyamide 6.6.

33. The combination of claim 15, wherein the second component is a thermoplastic.

34. The combination of claim 15, wherein the second component is selected from the group of thermoplastics comprising co-polyester, polyamide, co-polyamide and polyolefin.

35. The combination of claim 15, wherein the second component is a polypropylene.

36. The combination of claim 15, wherein the second component is a polyamide 6.

37. The combination of claim 15, wherein the second component is melted using ultrasonic energy.

38. The combination of claim 15, wherein the seam (80) is formed continuously.

39. The combination of claim 15, wherein the functional layer (50) is a membrane or a film.

40. The combination of claim 15, wherein the functional layer (50) is selected from the group of materials consisting of polyesters, polyamides, polyolefins, polyvinylchloride, polyketones, polysulfones, polycarbonates, fluoropolymers, polyacrylates, polyurethanes, co-polyetheresters, and co-polyetheramides.

41. The combination of claim 15, wherein the functional layer (50) is made from expanded polytetrafluoroethylene (PTFE).

42. Articles of clothing comprising at least one combination according to claim 15.

## Patentansprüche

1. Verfahren zum Zusammenfügen von wenigstens zwei Stücken eines wasserdichten Laminats durch Ausbilden einer wasserdichten Schweißnaht (80), wobei das Verfahren Folgendes aufweist:
a) Bereitstellen von wenigstens zwei wasserdichten Laminaten (1a, 1b), wobei jedes dieser Laminate wenigstens eine wasserdichte Funktionsschicht (50), die an eine Textilschicht (30) laminiert ist, aufweist, wobei die Textilschicht (30) aus Garnen hergestellt ist, die wenigstens eine erste Komponente und eine zweite Komponente aufweisen, wobei die erste Komponente gegenüber einer ersten Temperatur stabil ist und die zweite Komponente bei einer zweiten Temperatur schmilzt, wobei die erste Temperatur höher ist als die zweite Temperatur, und jedes der Laminate wenigstens eine Kante (60a, 60b) aufweist;
b) Nebeneinanderlegen der wenigstens zwei Laminate dergestalt, dass die Textilschichten einander berühren und wenigstens eine der Kanten (60a) eines der Laminate (1a) auf wenigstens eine der Kanten (60b) wenigstens eines anderen Laminats (1b) ausgerichtet ist, so dass ein Kantenbereich (65) entsteht;
c) Verschweißen und Zusammendrücken des Kantenbereichs (65) bei einer Temperatur innerhalb des Schmelzbereichs der zweiten Komponente und unterhalb der ersten Temperatur, dergestalt, dass die zweite Komponente schmilzt und eine Naht zwischen den Stücken bildet;
d) Abschneiden der Nahttoleranz; und
e) Verschweißen und Zusammendrücken der Naht dergestalt, dass die Kanten der wenigstens zwei Laminate in einer Kante an Kante aneinanderstoßenden Ausrichtung neu ausgerichtet werden.

2. Verfahren nach Anspruch 1, wobei Schritt c) und Schritt d) gleichzeitig ausgeführt werden.

3. Verfahren nach Anspruch 1, wobei die zweite Komponente bei einer Temperatur im Bereich von 160°C bis 230°C schmelzbar ist.

4. Verfahren nach Anspruch 1, wobei die erste Komponente gegenüber einer Temperatur von wenigstens 180°C stabil ist.

5. Verfahren nach Anspruch 1, wobei der Temperaturunterschied zwischen der ersten Temperatur und der zweiten Temperatur wenigstens 20°C beträgt.

6. Verfahren nach Anspruch 1, wobei Schritt c) und e) bei gleichen Temperaturen ausgeführt werden.

7. Verfahren nach Anspruch 1, wobei Schritt c) bei einer Temperatur im Bereich von 160°C bis 230°C ausgeführt wird.

8. Verfahren nach Anspruch 1, wobei Schritt e) bei einer Temperatur von 160°C bis 230°C ausgeführt wird.

9. Verfahren nach Anspruch 1, wobei Schritt c) und Schritt e) unter Verwendung von Ultraschallenergie ausgeführt werden.

10. Verfahren nach Anspruch 1, wobei Schritt c) und Schritt e) in einem kontinuierlichen Prozess ausgeführt werden.

11. Verfahren nach Anspruch 1, wobei die Funktionsschicht (50) aus expandiertem Polytetrafluorethylen (PTFE) hergestellt ist.

12. Verfahren nach Anspruch 1, wobei die Naht (80) durch wenigstens eine Verstärkung verstärkt ist.

13. Verfahren nach Anspruch 12, wobei die Verstärkung aus der Gruppe von Materialien ausgewählt ist, die Bänder, Fäden und Textillaminate aufweist.

14. Verfahren nach Anspruch 13, wobei die Verstärkung aus der Gruppe von Fäden ausgewählt ist, die wenigstens eine Komponente aufweisen, die bei einer Temperatur im Bereich von 160°C bis 230°C schmilzt.

15. Kombination aus wenigstens einem ersten Laminat (1a) mit einer ersten Kante (60a) und einem zweiten Laminat (1b) mit einer zweiten Kante (60b), die an einer wasserdichten Schweißnaht (80) in einem Kantenbereich (65) zusammengefügt sind,
wobei jedes der Laminate Folgendes aufweist:
eine Schicht (50), die eine wasserdichte Funktionsschicht aufweist, und
eine Textilschicht (30), die an die Schicht (50) laminiert ist,
wobei die Textilschicht (30) aus Garnen hergestellt ist, die wenigstens eine erste Komponente und eine zweite Komponente aufweisen,
wobei die erste Komponente gegenüber einer ersten Temperatur stabil ist und die zweite Komponente bei einer zweiten Temperatur schmilzt, wobei die erste Temperatur höher ist als die zweite Temperatur.
und wobei die Naht (80) durch die geschmolzene zweite Komponente und die nicht-geschmolzene erste Komponente der Textilschichten jedes Laminats gebildet wird,
und wobei die erste Kante (60a) auf die zweite Kante (60b) in einer Kante an Kante aneinanderstoßenden Ausrichtung ausgerichtet ist.

16. Kombination nach Anspruch 15, wobei jedes der Laminate (1a, 1b) eine Laminatdicke aufweist und die Schweißnaht (80) eine Nahtdicke aufweist, wobei die Nahtdicke gleich der Laminatdicke ist.

17. Kombination nach Anspruch 15, wobei die Schweißnaht (80) nicht geradlinig ist.

18. Kombination nach Anspruch 15, wobei die Schweißnaht (80) die Form wenigstens einer Krümmung hat, so dass eine dreidimensionale Kombination entsteht.

19. Kombination nach Anspruch 15, wobei die Schweißnaht (80) durch wenigstens eine Verstärkung verstärkt ist.

20. Kombination nach Anspruch 19, wobei die Verstärkung aus der Gruppe von Materialien ausgewählt ist, die Bänder, Fäden und Textillaminate aufweist.

21. Kombination nach Anspruch 20, wobei die Verstärkung aus der Gruppe von Fäden ausgewählt ist, die wenigstens eine Komponente aufweisen, die bei einer Temperatur im Bereich von 160°C bis 230°C schmilzt.

22. Kombination nach Anspruch 15, wobei die zweite Komponente bei einer Temperatur im Bereich von 160°C bis 230°C schmelzbar ist.

23. Kombination nach Anspruch 15, wobei die erste Komponente gegenüber einer Temperatur von wenigstens 180°C stabil ist.

24. Kombination nach Anspruch 15, wobei der Unterschied zwischen der ersten Temperatur und der zweiten Temperatur wenigstens 20°C beträgt.

25. Kombination nach Anspruch 15, wobei die Naht (80) einem Wassereindringdruck von wenigstens 0,13 bar widersteht.

26. Kombination nach Anspruch 15, wobei die Naht (80) eine Breite von weniger als 0,25 cm hat.

27. Kombination nach Anspruch 15, wobei die Textilschicht (30) aus mehreren Garnen in der Form von Strängen, Filamenten, Fäden oder Fasern zusammengesetzt ist.

28. Kombination nach Anspruch 27, wobei das Garn eine Mantel-Kern-Struktur aufweist, wobei die zweite Komponente den Überzug bildet.

29. Kombination nach Anspruch 27, wobei das Garn eine "Seite-an-Seite"-Struktur aufweist.

30. Kombination nach Anspruch 15, wobei die zweite Schicht (30) eine gewirkte, gewebte oder Vlies-Textilschicht ist.

31. Kombination nach Anspruch 15, wobei die erste Komponente aus der Gruppe von Polymeren ausgewählt ist, die Polyester-, Polyamid-, Zellulose- oder Proteinfasern aufweist.

32. Kombination nach Anspruch 15, wobei es sich bei der ersten Komponente um Polyamid 6.6 handelt.

33. Kombination nach Anspruch 15, wobei es sich bei der zweiten Komponente um ein Thermoplast handelt.

34. Kombination nach Anspruch 15, wobei die zweite Komponente aus der Gruppe von Thermoplastkunststoffen ausgewählt ist, die Copolyester, Polyamid, Copolyamid und Polyolefin aufweist.

35. Kombination nach Anspruch 15, wobei es sich bei der zweiten Komponente um ein Polypropylen handelt.

36. Kombination nach Anspruch 15, wobei es sich bei der zweiten Komponente um ein Polyamid 6 handelt.

37. Kombination nach Anspruch 15, wobei die zweite Komponente unter Verwendung von Ultraschallenergie geschmolzen wird.

38. Kombination nach Anspruch 15, wobei die Naht (80) kontinuierlich ausgebildet wird.

39. Kombination nach Anspruch 15, wobei es sich bei der Funktionsschicht (50) um eine Membran oder eine Folie handelt.

40. Kombination nach Anspruch 15, wobei die Funktionsschicht (50) aus der Gruppe von Materialien ausgewählt ist, die aus Polyestern, Polyamiden, Polyolefinen, Polyvinylchlorid, Polyketonen, Polysulfonen, Polycarbonaten, Fluorpolymeren, Polyacrylaten, Polyurethanen, Copolyetherestern und Copolyetheramiden besteht.

41. Kombination nach Anspruch 15, wobei die Funktionsschicht (50) aus expandiertem Polytetrafluorethylen (PTFE) hergestellt ist.

42. Bekleidungsgegenstände, die wenigstens eine Kombination nach Anspruch 15 aufweisen.

## Revendications

1. Procédé pour raccorder au moins deux pièces de tissu laminé imperméable à l'eau en formant un joint soudé imperméable à l'eau (80), ledit procédé comportant les étapes consistant à :
a) mettre à disposition au moins deux tissus laminés imperméables à l'eau (1a, 1b), chacun desdits tissus laminés comportant au moins une couche fonctionnelle imperméable à l'eau (50) laminée sur une couche textile (30), ladite couche textile (30) étant constituée de fils comportant au moins un premier composant et un deuxième composant, le premier composant étant stable jusqu'à une première température et le deuxième composant fondant à une deuxième température, la première température étant supérieure à la deuxième température, et chacun desdits tissus laminés présentant au moins un bord (60a, 60b) ;
b) placer les au moins deux tissus laminés ensemble de telle sorte que les couches textiles soient au contact l'une de l'autre et qu'au moins un des bords (60a) de l'un des tissus laminés (1a) soit aligné avec au moins un des bords (60b) d'au moins un autre tissu laminé (1b) pour former une zone de bord (65) ;
c) souder et comprimer ladite zone de bord (65) à une température située dans la plage de fusion du deuxième composant et au-dessous de la première température de telle sorte que le deuxième composant fonde et forme un joint entre les pièces ;
d) découper la marge de raccord ; et
e) souder et comprimer le joint pour réorienter lesdits bords des au moins deux tissus laminés dans une orientation alignée bord à bord.

2. Procédé selon la revendication 1, l'étape c) et l'étape d) étant exécutées simultanément.

3. Procédé selon la revendication 1, le deuxième composant étant fusible à une température située dans la plage de 160°C à 230°C.

4. Procédé selon la revendication 1, le premier composant étant stable jusqu'à une température d'au moins 180°C.

5. Procédé selon la revendication 1, la différence de température entre la première température et la deuxième température étant d'au moins 20°C.

6. Procédé selon la revendication 1, les étapes c) et e) étant exécutées aux mêmes températures.

7. Procédé selon la revendication 1, l'étape c) étant exécutée à une température située dans la plage de 160°C à 230°C.

8. Procédé selon la revendication 1, l'étape e) étant exécutée à une température de 160°C à 230°C.

9. Procédé selon la revendication 1, l'étape c) et l'étape e) étant exécutées en utilisant une énergie ultrasonique.

10. Procédé selon la revendication 1, l'étape c) et l'étape e) étant exécutées en un processus continu.

11. Procédé selon la revendication 1, la couche fonctionnelle (50) étant constituée de polytétrafluoréthylène (PTFE) expansé.

12. Procédé selon la revendication 1, le joint (80) étant renforcé par au moins un renfort.

13. Procédé selon la revendication 12, le renfort étant choisi dans le groupe de matériaux comprenant des rubans, des fils et des textiles laminés.

14. Procédé selon la revendication 13, le renfort étant choisi dans le groupe de fils comprenant au moins un composant fondant à une température située dans la plage de 160°C à 230°C.

15. Combinaison d'au moins un premier tissu laminé (1a) présentant un 1er bord (60a) et d'un deuxième tissu laminé (1b) présentant un deuxième bord (60b) raccordés ensemble au niveau d'un joint soudé imperméable à l'eau (80) dans une zone de bord (65), chacun desdits tissus laminés comportant :
une couche (50) comportant une couche fonctionnelle imperméable à l'eau et une couche textile (30) laminée sur ladite couche (50),
ladite couche textile (30) étant constituée de fils comportant au moins un premier composant et un deuxième composant,
le premier composant étant stable jusqu'à une première température et le deuxième composant fondant à une deuxième température, la première température étant supérieure à la deuxième température,
et le joint (80) étant formé par le deuxième composant fondu et le premier composant non fondu des couches textiles de chaque tissu laminé, et le premier bord (60a) étant orienté vers le deuxième bord (60b) dans une orientation alignée bord à bord.

16. Combinaison selon la revendication 15, chacun des tissus laminés (1a, 1b) présentant une épaisseur de tissu laminé et le joint soudé (80) présentant une épaisseur de joint, ladite épaisseur de joint étant égale à l'épaisseur de tissu laminé.

17. Combinaison selon la revendication 15, le joint soudé (80) étant non linéaire.

18. Combinaison selon la revendication 15, le joint soudé (80) présentant une forme dotée d'au moins une courbure pour former une combinaison tridimensionnelle.

19. Combinaison selon la revendication 15, le joint soudé (80) étant renforcé par au moins un renfort.

20. Combinaison selon la revendication 19, le renfort étant choisi dans le groupe de matériaux comprenant des rubans, des fils et des textiles laminés.

21. Combinaison selon la revendication 20, le renfort étant choisi dans le groupe de fils comprenant au moins un composant fondant à une température située dans la plage de 160°C à 230°C.

22. Combinaison selon la revendication 15, le deuxième composant étant fusible à une température située dans la plage de 160°C à 230°C.

23. Combinaison selon la revendication 15, le premier composant étant stable jusqu'à une température d'au moins 180°C.

24. Combinaison selon la revendication 15, la différence de température entre la première température et la deuxième température étant d'au moins 20°C.

25. Combinaison selon la revendication 15, le joint (80) résistant à une pression d'entrée d'eau d'au moins 0,13 bar.

26. Combinaison selon la revendication 15, le joint (80) présentant une largeur inférieure à 0,25 cm.

27. Combinaison selon la revendication 15, la couche textile (30) étant composée d'une pluralité de fils sous la forme de brins, filaments, fils ou fibres.

28. Combinaison selon la revendication 27, le fil présentant une structure gaine-coeur, le deuxième composant formant la couverture.

29. Combinaison selon la revendication 27, le fil présentant une structure "côte à côte".

30. Combinaison selon la revendication 15, la deuxième couche (30) étant une couche textile tricotée, tissée ou non tissée.

31. Combinaison selon la revendication 15, le premier composant étant choisi dans le groupe de polymères comprenant le polyester, le polyamide, la cellulose ou les fibres de protéines.

32. Combinaison selon la revendication 15, le premier composant étant du polyamide 6.6.

33. Combinaison selon la revendication 15, le deuxième composant étant un thermoplastique.

34. Combinaison selon la revendication 15, le deuxième composant étant choisi dans le groupe de thermoplastiques comprenant le copolyester, le polyamide, le copolyamide et la polyoléfine.

35. Combinaison selon la revendication 15, le deuxième composant étant un polypropylène.

36. Combinaison selon la revendication 15, le deuxième composant étant un polyamide 6.

37. Combinaison selon la revendication 15, le deuxième composant étant fondu en utilisant une énergie ultrasonique.

38. Combinaison selon la revendication 15, le joint (80) étant formé de manière continue.

39. Combinaison selon la revendication 15, la couche fonctionnelle (50) étant une membrane ou une pellicule.

40. Combinaison selon la revendication 15, la couche fonctionnelle (50) étant choisie dans le groupe de matériaux constitué des polyesters, des polyamides, des polyoléfines, du polychlorure de vinyle, des polycétones, des polysulfones, des polycarbonates, des fluoropolymères, des polyacrylates, des polyuréthanes, des esters de copolyéther et des amides de copolyéther.

41. Combinaison selon la revendication 15, la couche fonctionnelle (50) étant constituée de polytétrafluoréthylène (PTFE) expansé.

42. Articles d'habillement comportant au moins une combinaison selon la revendication 15.
